# EUROPEAN PATENT SPECIFICATION

(11) **EP 3 004 703 B1**
(45) Date of publication and mention of the grant of the patent: **11.07.2018**
(21) Application number: 14725470.0
(22) Date of filing: 22.05.2014
(51) Int. Cl.: F16K 31/08, F23K 5/00, F23N 5/24, F16K 31/00

(54) **GAS SHUT-OFF VALVE WITH THERMAL SAFETY**
GAS-ABSPERRVENTIL MIT THERMISCHER SICHERHEITSFUNKTION
VANNE D'ARRÊT AVEC SÉCURITÉ THERMIQUE

(30) Priority: 29.05.2013 ES 201330662
(43) Date of publication of application: 13.04.2016
(73) Proprietor: Copreci, S.Coop., 20550 Aretxabaleta (ES)
(72) Inventor: QUEREJETA ANDUEZA, Felix, F-64700 Hendaye (FR)
(74) Representative: Igartua, Ismael
(86) International application number: PCT/EP2014/060498
(87) International publication number: WO 2014/191289

(56) References cited:
- EP-A1- 1 382 907
- EP-A1- 2 444 730
- WO-A1-2009/116865
- DD-A1- 110 336
- US-A- 2 233 659
- US-A- 2 248 798

## Description

### TECHNICAL FIELD

The present invention relates to gas shut-off valves with thermal safety.

### PRIOR ART

Gas valves are widely known and used. Gas valves serve to allow, prevent or regulate the passage of gas from one point (inlet) to another point (outlet). Valves that acquire two positions, i.e., open and closed positions, are commonly known as shut-off valves.

There are different types of shut-off valves. Some of them are shut-off valves that open or close depending on electric signals, for example. These include ON-OFF type shut-off valves where a coil is powered for opening the valve and it remains open as long as the coil is being powered, and flip-flop type shut-off valves where the valve is opened by providing a current pulse to the power supply but continuous power supply is not needed to keep the valve open, a current pulse opposite the first pulse being applied for closing said valve.

Valves using permanent magnets and elements with ferromagnetic properties for maintaining a state of the valve are known. As a result of the ferromagnetic properties of the element and the magnetic field of the permanent magnet, said element remains adhered to the permanent magnet, thus maintaining the state of the valve. When a specific temperature is exceeded, the element loses its ferromagnetic properties and no longer adheres to the permanent magnet. This temperature where the element loses its ferromagnetic properties is known as the Curie temperature.

Document GB 1485215 discloses a gas shut-off valve that is usually closed and opens when a specific temperature in its surrounding areas is exceeded. The valve comprises a permanent magnet and a heat sensing element having a Curie temperature equal to or greater than a gas ignition temperature, such that the heat sensing element loses its ferromagnetic properties when the temperature exceeds said value and is separated from the permanent magnet, the valve being opened. Therefore, the valve only opens once a specific temperature, which corresponds with the flame ignition temperature, has been exceeded and it can also be used as a flame detector.

Document US 2248798 A discloses a heat operated valve operated in response to change in the magnetic characteristics of Curie point metals, comprising a valve member movable between a closed position in which the valve remains closed and no fluid can flow therethrough and an opened position in which the valve remains opened, a disc of Curie point metal, and an electric heater for heating the disc above its Curie point. When the disc is not heated it is below its Curie point (ferromagnetic) and holds the valve member in the closed position, while when it is heated above its Curie point it no longer holds the valve member and said valve member moves to the opened position.

### DISCLOSURE OF THE INVENTION

The object of the invention is to provide a safety gas shut-off valve as described in the claims.

The safety gas shut-off valve comprises a gas inlet, a gas outlet, an intermediate opening between the inlet and the outlet, and a shut-off element which blocks or closes the intermediate opening in a shut-off position, preventing the passage of gas from the inlet to the outlet, and allows said passage in an open position.

The valve further comprises a cover, a ferromagnetic element which is fixed to the shut-off element and comprises a specific Curie temperature, a spring associated with the shut-off element through a first end and with the cover through a second end, and a permanent magnet attached to the cover. As a result of the ferromagnetic properties of the ferromagnetic element and the magnetic field generated by the permanent magnet, said ferromagnetic element adheres to the permanent magnet, the intermediate opening being open, and the valve therefore being open. When a specific temperature which corresponds with the specific Curie temperature for the ferromagnetic element is reached, the ferromagnetic element loses its ferromagnetic properties and due to the action of the spring, said ferromagnetic element is separated from the permanent magnet and the shut-off element closes the intermediate opening, the valve being closed.

The valve of the invention allows uses other than those which are common in gas shut-off valves, such as the use thereof as a safety device to prevent something worse from happening in the event of fire or unwanted blazes, for example.

The configuration of the valve of the invention and the arrangement of its elements gives rise to obtaining a valve in an easy, simple and compact manner fulfilling the function of closing automatically in response to adverse conditions such as fire or unwanted flame in the proximities of the actual valve, for example; in summary, a valve that closes automatically when unwanted temperatures are reached in its surrounding areas is achieved.

Therefore, as a safety measure in response to fire, this valve can be arranged in the entrance of a house, of the kitchen or of the room where gas is used, such that if fire is detected, said valve will automatically cut off the gas supply to the house, kitchen or room and stop further feeding the fire. As a safety measure in response to an unwanted flame such as when oil in a frying pan catches fire, for example, this valve can be arranged above the burners where the frying pan is arranged (in a hood, for example, if there is one), such that in response to the presence of the unwanted blaze in the frying pan, the valve would close, cutting off the passage of gas to the burner that heats the flame. These examples are merely illustrative and in no case limiting, since the valve can also be used in ovens and cooktops, for example, and in the outlets of butane cylinders to prevent gas from seeping out of the cylinders when the temperature in the surrounding area of the valve exceeds a specific value.

These and other advantages and features of the invention will become evident in view of the drawings and the detailed description of the invention.

### DESCRIPTION OF THE DRAWINGS

Figure 1 shows a perspective view of an embodiment of the gas shut-off valve with thermal safety.
Figure 2 is a cross-section view of the body of the valve of Figure 1.
Figure 3 is a cross-section view of the valve of Figure 1, wherein said valve is open.
Figure 4 is a cross-section view of the valve of Figure 1, wherein said valve is closed.
Figure 5 is a cross-section view of the valve of Figure 1, wherein said valve is open and a manual actuator is in position for opening the valve.

### DETAILED DISCLOSURE OF THE INVENTION

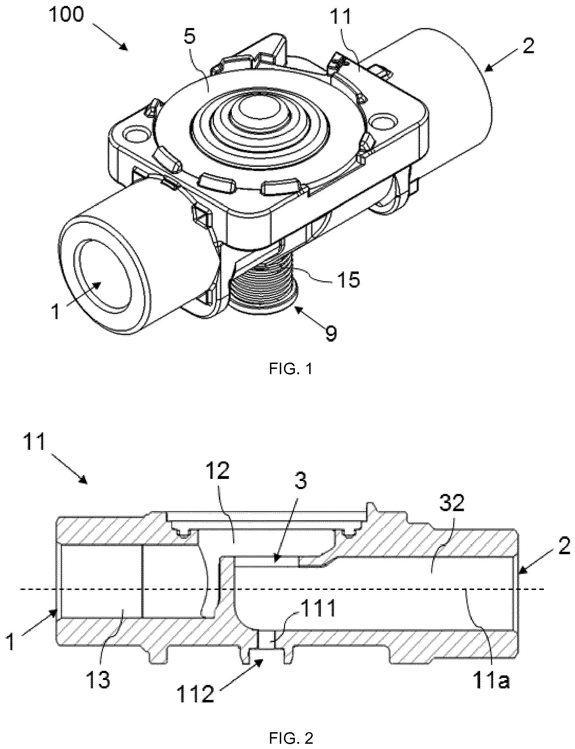

Figure 1 shows by way of example an embodiment of the gas shut-off valve 100 with thermal safety of the invention. The valve 100 comprises a body 11 shown by way of example in Figure 2, comprising a gas inlet 1, a gas outlet 2, an intermediate opening 3 between the inlet 1 and the outlet 2, an inlet conduit 13 extending from the inlet 1 to the intermediate opening 3 and an outlet conduit 32 extending from the intermediate opening 3 to the outlet 2. The body 11 comprises a longitudinal axis 11a and the intermediate opening 3 is substantially parallel to said longitudinal axis 11a. In the embodiment shown in the drawings, the conduits 13 and 32 extend longitudinally.

The body 11 further comprises a housing 12 which is arranged between the inlet conduit 13 and the intermediate opening 3 and on the intermediate opening 3. The housing 12 serves for housing the elements of the valve 100 which work together for opening or closing the valve 100 and which will be explained below. To facilitate the assembly of the valve 100, particularly to facilitate the insertion of said elements in the housing 12, said housing 12 is accessible from outside the body 11. For the operation of the valve 100, the housing 12 stops being accessible from the outside, and to that end the valve 100 comprises a cover 5 and at least one sealing element 17 between the cover 5 and the body 11 to prevent gas inside the valve 100 from leaking out through the areas of attachment between the cover 5 and the body 11.

The valve 100 comprises a shut-off element 4 which has a specific profile suitable for being able to block or close the intermediate opening 3 when required, housed in the housing 12 and suitable for closing the intermediate opening 3 in a shut-off position and preventing communication between the inlet 1 and the outlet 2, and therefore preventing gas from being able to reach the outlet 2 from the inlet 1, not preventing said communication in an open position. In the embodiment shown in the drawings, the shut-off element 4 is suitable for moving transversely with respect to the longitudinal axis 11a of the body 11 for changing position. The shut-off element 4 has a specific profile which is suitable for closing the intermediate opening 3 when required.

The valve 100 comprises a ferromagnetic element 6 which is arranged in the housing 12 fixed to the shut-off element 4, moving integrally with it and comprising a specific Curie temperature that depends on what is required, as will be explained below. The valve 100 further comprises in the housing 12 a spring 7 associated with the shut-off element 4 through a first end and with the cover 5 through a second end, and a static permanent magnet 8. In one embodiment, the permanent magnet 8 is attached to the cover 5, and to facilitate this attachment the cover 5 is made of a ferromagnetic material such that the cover 5 and the permanent magnet 8 are attached to one another as a result of the permanent magnetic field generated by the permanent magnet 8. In other embodiments, it is also possible to use other types of attachments to attach the cover 5 and the permanent magnet 8 to one another. The ferromagnetic element 6 is arranged between the shut-off element 4 and the permanent magnet 8.

The shut-off element 4 is an element of revolution comprising two concentric sections arranged one after another. A first section comprises a smaller radius but a greater length than a second section. The first section is covered by the ferromagnetic element 6, and the second end of the spring 7 is associated with the second section of the shut-off element 4. In the embodiment shown in the drawings, the spring 7 is supported on the second section of the shut-off element 4 but it may be attached to said second section.

In the embodiment shown in the drawings, the sealing element 17 and the shut-off element 4 are part of one and the same element that corresponds with a membrane 40. Therefore, the functions of sealing (a function of the sealing element 17) and closing the valve 100 (a function of the shut-off element 4) are performed with a single element (membrane 40), which facilitates the manufacture and assembly of the valve 100. The membrane 40 is arranged in the housing 12 of the body 11 of the valve 100 and is manufactured from an elastomer material, the part of the membrane 40 connecting the sealing element 17 and the shut-off element 4 being flexible. A space where the ferromagnetic element 6, the spring 7 and the permanent magnet 8 are arranged is defined between the cover 5 and the membrane 40. In other embodiments relating to the embodiment shown in the drawings, the sealing element 17 and the shut-off element 4 can be two independent elements.

The operation of the valve 100 is explained below.

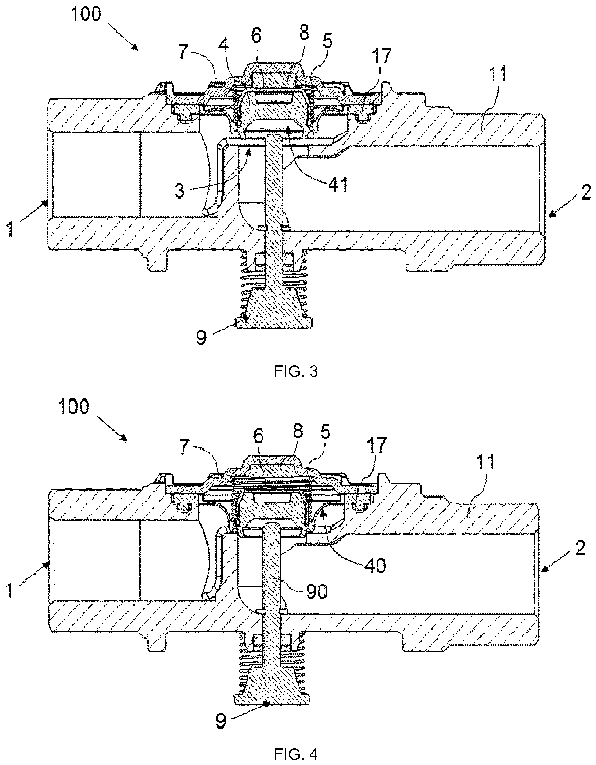

When the valve 100 is open, the permanent magnetic field generated by the permanent magnet 8 causes the ferromagnetic element 6 to adhere to the permanent magnet 8, as shown in Figure 3. The height of the shut-off element 4 is less than the distance between the intermediate opening 3 and the permanent magnet 8, such that when the ferromagnetic element 6 adheres to the permanent magnet 8, since the shut-off element 4 and the ferromagnetic element 6 are attached to one another, there is a free space between the intermediate opening 3 and the shut-off element 4 which is used by the gas to go from the inlet conduit 13 to the outlet conduit 32, and therefore to go from the inlet 1 to the outlet 2. In this situation the valve 100 is open.

The spring 7 is sized and configured such that when the valve 100 is open the spring 7 is compressed. When the surrounding area of the valve 100 exceeds the predetermined Curie temperature of the ferromagnetic element 6, the ferromagnetic element 6 loses its ferromagnetic properties and is no longer attracted by the permanent magnet 8. In this situation, the force of the compressed spring 7 does not withstand any counteracting force and the spring 7 expands to recover its standby shape, causing the shut-off element 4 which is associated with the second end of the spring 7 to move towards the intermediate opening 3, closing it. The ferromagnetic element 6 moves integrally with the shut-off element 4, being separated from the permanent magnet 8. In this situation, the valve 100 is closed and the spring 7 is in standby, as shown in Figure 4. The Curie temperature is selected depending on the temperature in the surrounding area of the valve 100 starting from which passage of gas through the valve 100 is to be prevented, such that the valve 100 acts as a thermal safety device. In one embodiment, the Curie temperature is within a range defined between about 90°C and about 130°C, such that the valve 100 closes when there is a fire or a flame in its surrounding area. It must be indicated that the temperature inside the valve 100 and in its surrounding area is virtually the same.

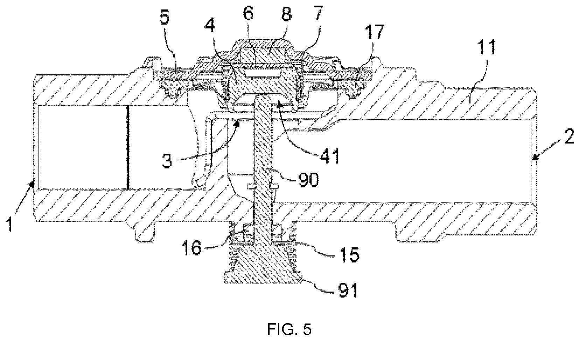

In the embodiment shown in the drawings, the valve 100 comprises a manual actuator 9 for manually opening same. The valve 100 can thus be opened manually, such action being depicted in Figure 5, either before the first use or after having been close for safety reasons. The manual actuator 9 is accessible from outside so that a user can act on it, but it goes into the valve 100 to move the ferromagnetic element 6 closer to the permanent magnet 8, so that the permanent magnetic field attracts the ferromagnetic element 6 and keeps it attracted. The shut-off element 4 is fixed to the ferromagnetic element 6 such that the valve 100 is opened.

The body 11 comprises a through hole 111 communicating the inside of the valve 100 with the outside of the valve 100, and the manual actuator 9 comprises a rod 90 passing through the through hole 11. The valve 100 comprises a sealing element 16 to prevent gas inside the valve 100 from leaking out due to the through hole 111, and to that end the body 11 comprises a housing 112 where the sealing element 16, which corresponds to an O-ring, is arranged. In the embodiment shown in the drawings, the housing 112 is arranged outside the valve 100, although in other embodiments relating to this embodiment, the housing can be arranged inside the valve 100.

The rod 90 comprises a first zone inside the body 11, particularly in the outlet conduit 32, and a second zone outside the body 11. A first end of the rod 90, belonging to the first zone, is facing the shut-off element 4, and a second end of the rod 90, belonging to the second zone, is accessible for a user. The valve 100 comprises a spring element 15 which is arranged outside the body 11 and associated with the second end of the rod 90. Said second end comprises a seat 91, and the spring element 15 is attached to said seat 91 through a first end and associated with the body 11 through a second end opposite said first end. In the embodiment shown in the drawings, the spring element 15 is supported on the seat 91 of the rod 90 but it may be attached to said seat 91. The second zone of the rod 90 goes through the spring element 15.

When a user acts on the manual actuator 9 for opening the valve 100, the rod 90 is moved towards the shut-off element 4, pushing it. The rod 90 is aligned with the shut-off element 4 and is moved in alignment with said shut-off element 4, transverse to the longitudinal axis 11a of the body 11. In the embodiment shown in the drawings, the shut-off element 4 comprises a housing 41 to facilitate the actuation of the rod 90 thereon, although it may not end and associated with the body 11 through a second end opposite said first end. In the embodiment shown in the drawings, the spring element 15 is supported on the seat 91 of the rod 90 but it may be attached to said seat 91. The second zone of the rod 90 goes through the spring element 15.

When a user acts on the manual actuator 9 for opening the valve 100, the rod 90 is moved towards the shut-off element 4, pushing it. The rod 90 is aligned with the shut-off element 4 and is moved in alignment with said shut-off element 4, transverse to the longitudinal axis 11a of the body 11. In the embodiment shown in the drawings, the shut-off element 4 comprises a housing 41 to facilitate the actuation of the rod 90 thereon, although it may not have said housing 41. As the shut-off element 4 pushed by the rod 90 moves, the ferromagnetic element 6 also moves and adheres to the permanent magnet 8, the valve 100 remaining open even when the shut-off element 4 is no longer being pushed (provided that the temperature in the surrounding area of the valve 100 is less than the predetermined Curie temperature). When the user stops acting on the manual actuator 9, the spring recovers its standby position, forcing the rod 90 to return to its initial position. Therefore, when the temperature in the surrounding area of the valve 100 reaches the Curie temperature, the valve 100 can be closed because if the rod 90 does not return to its position, said rod would prevent the movement of the shut-off element 4 for closing the intermediate opening 3.

## Claims

1. Gas shut-off valve comprising a gas inlet (1), a gas outlet (2), an intermediate opening (3) between the inlet (1) and the outlet (2), a body (11) internally defining the intermediate opening (3) and comprising the inlet (1), the outlet (2), an inlet conduit (13) extending from the inlet (1) to the intermediate opening (3) and an outlet conduit (32) extending from the intermediate opening (3) to the outlet (2), and a shut-off element (4), the body (11) further comprising a housing (12) which is arranged on the intermediate opening (3) and is accessible from outside the body (11), the shut-off element (4) being arranged in the housing (12) and the valve (100) comprising a cover (5) arranged on the housing (12) and attached to the body (11), a ferromagnetic element (6) which is arranged in the housing (12) fixed to the shut-off element (4) and which comprises a predetermined Curie temperature, a spring (7) associated with the shut-off element (4) through a first end and with the cover (5) through a second end, and a permanent magnet (8) attached to the cover (5), the ferromagnetic element (6) being arranged between the permanent magnet (8) and the shut-off element (4), **characterized in that** the Curie temperature of the ferromagnetic element (6) is selected depending on the temperature in the surrounding area of the valve (100) starting from which passage of gas through the valve (100) is to be prevented, such that the valve (100) closes automatically when unwanted temperatures are reached in said surrounding area, said valve (100) acting as a thermal safety device, said valve (100) also comprising a manual actuator (9) with a rod (90) comprising a first zone inside the body (11), particularly in the outlet conduit (32), and a second zone outside the body (11), an end of the rod (90), which belongs to the first zone facing the shut-off element (4), said manual actuator (9) being accessible from outside so that a user can act on it to move the ferromagnetic element (6) closer to the permanent magnet (8) so that the permanent magnetic field attracts the ferromagnetic element (6) and keeps it attracted.

2. Valve according to claim 1, wherein the shut-off element (4) is an element of revolution comprising two concentric sections arranged one after another, a first section comprising a smaller radius but a greater length than a second section, and the first section being covered by the ferromagnetic element (6).

3. Valve according to claim 2, wherein the first section of the shut-off element (4) passes through the spring (7), the second end of the spring (7) being associated with the second section of the shut-off element (4).

4. Valve according to claim 3, wherein the second end of the spring (7) is supported on the second section of the shut-off element (4).

5. Valve according to any of the preceding claims, comprising a sealing element (17) arranged between the cover (5) and the body (11).

6. Valve according to claim 5, wherein the sealing element (17) and the shut-off element (4) are part of one and the same element, said element corresponding with a membrane (40) manufactured from an elastomer material, the part of the membrane (40) connecting the sealing element (17) and the shut-off element (4) being flexible.

7. Valve according to claim 6, wherein the body (11) comprises a through hole (111) with the rod (90) of the manual actuator (9) passing through it.

8. Valve according to claim 7, wherein the rod (90) of the manual actuator (9) comprises a second end opposite the first end and belonging to the second zone, and the valve (100) comprises a spring element (15) which is arranged outside the body (11) and associated with the second end.

9. Valve according to claim 7, wherein the second end of the rod (90) of the manual actuator (9) comprises a seat (91), the spring element (15) being associated with said seat (91) through a first end and with the body (11) through a second end.

10. Valve according to claim 8, wherein the spring element (15) envelops at least part of the second zone of the rod (90) of the manual actuator (9).

11. Valve according to any of the preceding claims, wherein the body (11) comprises a housing (112) and wherein the valve (100) comprises a sealing element (16) arranged in said housing (112), the sealing element (16) surrounding the rod (90) of the manual actuator (9).

12. Valve according to claim 11, wherein the housing (112) and the sealing element (16) are arranged outside the body (11).

13. Valve according to any of the preceding claims, wherein the Curie temperature of the ferromagnetic element (6) is defined between about 90°C and about 130°C.

14. Valve according to any of the preceding claims, wherein the cover (5) is made of a ferromagnetic material.

## Patentansprüche

1. Gas-Absperrventil, umfassend einen Gaseinlass (1), einen Gasauslass (2), eine Zwischenöffnung (3) zwischen dem Einlass (1) und dem Auslass (2), einen Körper (11), der die Zwischenöffnung (3) im Inneren definiert und den Einlass (1), den Auslass (2), eine sich von dem Einlass (1) zu der Zwischenöffnung (3) erstreckende Einlassleitung (13) und eine sich von der Zwischenöffnung (3) zu dem Auslass (2) erstreckende Auslassleitung (32) und ein Absperrelement (4) umfasst, wobei der Körper (11) ferner ein Gehäuse (12) umfasst, das an der Zwischenöffnung (3) angeordnet und von außerhalb des Körpers (11) zugänglich ist, wobei das Absperrelement (4) in dem Gehäuse (12) angeordnet ist und das Ventil (100) eine an dem Gehäuse (12) angeordnete und an dem Körper (11) angebrachte Abdeckung (5) umfasst, ein ferromagnetisches Element (6), das in dem Gehäuse (12) angeordnet ist und an dem Absperrelement (4) befestigt ist und das eine vorbestimmte Curie-Temperatur umfasst, eine Feder (7), die mit dem Absperrelement (4) durch ein erstes Ende und mit der Abdeckung (5) durch ein zweites Ende verbunden ist, und einen an der Abdeckung (5) angebrachten Permanentmagneten (8), wobei das ferromagnetische Element (6) zwischen dem Permanentmagneten (8) und dem Absperrelement (4) angeordnet ist, **dadurch gekennzeichnet, dass** die Curie-Temperatur des ferromagnetischen Elements (6) in Abhängigkeit von der Temperatur in dem umgebenden Bereich des Ventils (100), ab der ein Gasdurchgang durch das Ventil (100) verhindert werden soll, ausgewählt ist, so dass das Ventil (100) automatisch schließt, wenn unerwünschte Temperaturen in dem umgebenden Bereich erreicht werden, wobei das Ventil (100) als thermische Sicherheitsvorrichtung wirkt, wobei das Ventil (100) auch einen manuellen Aktuator (9) mit einer Stange (90) umfasst, die eine erste Zone innerhalb des Körpers (11), insbesondere in der Auslassleitung (32), und eine zweite Zone außerhalb des Körpers (11) umfasst, wobei ein Ende der Stange (90), das zu der ersten Zone gehört, dem Absperrelement (4) zugewandt ist, wobei der manuelle Aktuator (9) von außen zugänglich, so dass ein Benutzer darauf einwirken kann, um das ferromagnetische Element (6) näher zu dem Permanentmagneten (8) zu bewegen, so dass das Permanentmagnetfeld das ferromagnetische Element (6) anzieht und es angezogen hält.

2. Ventil nach Anspruch 1, wobei das Absperrelement (4) ein Drehelement ist, das zwei konzentrische Abschnitte umfasst, die nacheinander angeordnet sind, wobei ein erster Abschnitt einen kleineren Radius, jedoch eine größere Länge als ein zweiter Abschnitt umfasst, und der erste Abschnitt durch das ferromagnetische Element (6) abgedeckt ist.

3. Ventil nach Anspruch 2, wobei der erste Abschnitt des Absperrelements (4) durch die Feder (7) hindurchläuft, wobei das zweite Ende der Feder (7) mit dem zweiten Abschnitt des Absperrelements (4) verbunden ist.

4. Ventil nach Anspruch 3, wobei das zweite Ende der Feder (7) an dem zweiten Abschnitt des Absperrelements (4) abgestützt ist.

5. Ventil nach einem der vorhergehenden Ansprüche, umfassend ein Dichtelement (17), das zwischen der Abdeckung (5) und dem Körper (11) angeordnet ist.

6. Ventil nach Anspruch 5, wobei das Dichtelement (17) und das Absperrelement (4) Teil ein und desselben Elements sind, wobei das Element einer Membran (40) entspricht, die aus einem Elastomermaterial hergestellt ist, wobei der Teil der Membran (40), der das Dichtelement (17) und das Absperrelement (4) verbindet, flexibel ist.

7. Ventil nach Anspruch 6, wobei der Körper (11) ein Durchgangsloch (111) umfasst, durch das die Stange (90) des manuellen Aktuators (9) hindurchtritt.

8. Ventil nach Anspruch 7, wobei die Stange (90) des manuellen Aktuators (9) ein zweites Ende umfasst, das dem ersten Ende gegenüberliegt und zu der zweiten Zone gehört, und das Ventil (100) ein Federelement (15) umfasst, das außerhalb des Körpers (11) angeordnet ist und mit dem zweiten Ende verbunden ist.

9. Ventil nach Anspruch 7, wobei das zweite Ende der Stange (90) des manuellen Aktuators (9) einen Sitz (91) umfasst, wobei das Federelement (15) mit dem Sitz (91) durch ein erstes Ende und mit dem Körper (11) durch ein zweites Ende verbunden ist.

10. Ventil nach Anspruch 8, wobei das Federelement (15) mindestens einen Teil der zweiten Zone der Stange (90) des manuellen Aktuators (9) umhüllt.

11. Ventil nach einem der vorhergehenden Ansprüche, wobei der Körper (11) ein Gehäuse (112) umfasst und wobei das Ventil (100) ein Dichtelement (16) umfasst, das in dem Gehäuse (112) angeordnet ist, wobei das Dichtelement (16) die Stange (90) des manuellen Aktuators (9) umgibt.

12. Ventil nach Anspruch 11, wobei das Gehäuse (112) und das Dichtelement (16) außerhalb des Körpers (11) angeordnet sind.

13. Ventil nach einem der vorhergehenden Ansprüche, wobei die Curie-Temperatur des ferromagnetischen Elements (6) zwischen etwa 90 °C und etwa 130 °C definiert ist.

14. Ventil nach einem der vorhergehenden Ansprüche, wobei die Abdeckung (5) aus einem ferromagnetischen Material gefertigt ist.

## Revendications

1. Vanne d'arrêt comprenant une entrée de gaz (1), une sortie de gaz (2), un orifice intermédiaire (3) entre l'entrée (1) et la sortie (2), un corps (11) délimitant à l'intérieur l'orifice intermédiaire (3) et comprenant l'entrée (1), la sortie (2), une conduite d'entrée (13) s'étendant à partir de l'entrée (1) vers l'orifice intermédiaire (3) et une conduite de sortie (32) s'étendant à partir de l'orifice intermédiaire (3) vers la sortie (2), et un élément (4) d'arrêt, le corps (11) comprenant en outre un boîtier (12) qui est disposé sur l'orifice intermédiaire (3) et est accessible depuis l'extérieur du corps (11), l'élément (4) d'arrêt étant disposé dans le logement (12) et la vanne (100) comprenant un couvercle (5) disposé sur le logement (12) et fixé au corps (11); un élément ferromagnétique (6) qui est disposé dans le logement (12) fixé à l'élément d'arrêt (4) et qui comprend un point de Curie prédéfini, un ressort (7) associé à l'élément d'arrêt (4) par une première extrémité et au couvercle (5) par une seconde extrémité, et un aimant permanent (8) fixé au couvercle (5), l'élément ferromagnétique (6) étant disposé entre l'aimant permanent (8) et l'élément d'arrêt (4), **caractérisée en ce que** le point de curie de l'élément ferromagnétique (6) est sélectionné en fonction de la température dans la zone environnante de la vanne (100) commençant à partir du passage de gaz par la vanne (100) à bloquer, de sorte que la vanne (100) se ferme automatiquement lorsque des températures non souhaitées sont atteintes dans ladite zone environnante, ladite vanne (100) agissant comme un dispositif de sécurité thermique, ladite vanne (100) comprenant également un actionneur manuel (9) doté d'une tige (90) comprenant une première zone à l'intérieur du corps (11), en particulier dans la conduite de sortie (32), et une seconde zone à l'extérieur du corps (11), une extrémité de la tige (90), qui appartient à la première zone faisant face à l'élément d'arrêt (4), ledit actionneur manuel (9) étant accessible depuis l'extérieur de sorte qu'un utilisateur puisse agir sur ce dernier pour déplacer l'élément ferromagnétique (6) plus près de l'aimant permanent (8) de sorte que le champ magnétique permanent attire l'élément ferromagnétique (6) et qu'il continue à l'attirer.

2. Vanne selon la revendication 1, l'élément d'arrêt (4) est un élément de révolution comprenant deux parties concentriques disposées l'une après l'autre, une première partie ayant un rayon inférieur mais une longueur supérieure à celui d'une seconde partie, et la première partie étant recouverte par l'élément ferromagnétique (6).

3. Vanne selon la revendication 2, la première partie de l'élément d'arrêt (4) traversant le ressort (7), la seconde extrémité du ressort (7) étant associée à la seconde partie de l'élément d'arrêt (4).

4. Vanne selon la revendication 3, la seconde extrémité du ressort (7) étant supportée sur la seconde partie de l'élément d'arrêt (4).

5. Vanne selon l'une quelconque des revendications précédentes, comprenant un élément d'étanchéité (17) disposé entre le couvercle (5) et le corps (11).

6. Vanne selon la revendication 5, l'élément d'étanchéité (17) et l'élément d'arrêt (4) faisant partie d'un seul et uniquement élément, ledit élément correspondant à une membrane (40) composée d'un matériau élastomère, la partie de la membrane (40) reliant l'élément d'étanchéité (17) à l'élément d'arrêt (4) étant souple.

7. Vanne selon la revendication 6, le corps (11) comprenant un trou traversant (111), la tige (90) de l'actionneur manuel (9) y passant à travers.

8. Vanne selon la revendication 7, la tige (90) de l'actionneur manuel (9) comprenant une seconde extrémité en regard de la première extrémité et appartenant à la seconde zone, et la vanne (100) comprenant un élément de ressort (15) qui est disposé à l'extérieur du corps (11) et associé à la seconde extrémité.

9. Vanne selon la revendication 7, la seconde extrémité de la tige (90) de l'actionneur manuel (9) comprenant un siège (91), l'élément de ressort (15) étant associé audit siège (91) par une première extrémité et au corps (11) par une seconde extrémité.

10. Vanne selon la revendication 8, l'élément de ressort (15) enveloppant au moins une partie de la seconde zone de la tige (90) de l'actionneur manuel (9).

11. Vanne selon l'une quelconque des revendications précédents, le corps (11) comprenant un logement (112) et la vanne (100) comprenant un élément d'étanchéité (16) disposé dans ledit boîtier (112), l'élément d'étanchéité (16) entourant la tige (90) de l'actionneur manuel (9).

12. Vanne selon la revendication 11, le logement (112) et l'élément d'étanchéité (16) étant disposé à l'extérieur du corps (11).

13. Vanne selon l'une quelconque des revendications précédentes, le point de Curie de l'élément ferromagnétique (6) étant défini entre environ 90°C et environ 130°C.

14. Vanne selon l'une quelconque des revendications précédentes, le couvercle (5) étant composé d'un matériau ferromagnétique.
